# EUROPÄISCHE PATENTSCHRIFT

(11) **EP 1 226 389 B1**
(45) Veröffentlichungstag und Bekanntmachung des Hinweises auf die Patenterteilung: **12.01.2005**
(21) Anmeldenummer: 00975968.9
(22) Anmeldetag: 31.10.2000
(51) Int. Cl.: F23J 7/00, B01D 53/70

(54) **VERFAHREN ZUR MINDERUNG DES GEHALTS VON POLYCHLORIERTEN DIBENZODIOXINEN UND -FURANEN IM ABGAS VON CHEMISCHEN HOCHTEMPERATUR-PROZESSEN**
METHOD FOR REDUCING THE CONTENT OF POLY-CHLORINATED DIBENZO-DIOXINS AND -FURANS IN THE EFFLUENT GAS FROM HIGH TEMPERATURE CHEMICAL PROCESSES
PROCEDE POUR REDUIRE LE TAUX DE DIBENZODIOXINES ET DE DIBENZOCHLORANES POLYCHLORES DANS DES REJETS GAZEUX DE PROCESSUS CHIMIQUES A HAUTE TEMPERATURE

(30) Priorität: 06.11.1999 DE 19953418
(43) Veröffentlichungstag der Anmeldung: 31.07.2002
(73) Patentinhaber: GSF-Forschungszentrum für Umwelt und Gesundheit GmbH, 85764 Oberschleissheim (DE)
(72) Erfinder: LENOIR, Dieter, 81925 München (DE); SAMARAS, Petros, GR-544 53 Thessaloniki (GR); SCHRAMM, Karl-Werner, 80538 München (DE); KETTRUP, Antonius, 59821 Ansbach (DE)
(86) Internationale Anmeldenummer: PCT/EP2000/010697
(87) Internationale Veröffentlichungsnummer: WO 2001/035023

(56) Entgegenhaltungen:
- EP-A- 0 435 848
- DE-A- 4 027 819
- US-A- 5 113 772

## Beschreibung

Die Erfindung betrifft ein Verfahren zur Minderung des Gehalts von polychlorierten Dibenzo-Dioxinen und -Furanen (PCCD/F) im Abgas von chemischen Hochtemperatur-Prozessen.

Bei vielen thermischen Prozessen entstehen chlorierte Aromaten wie hochtoxische Dioxine, die mit den Abgasen in die Umwelt gelangen. Diese sollten daher weitgehend aus dem Abgas entfernt werden.

Aus der US 4.793.270 ist ein Verfahren zur Dioxinminderungen bei der Abfallverbrennung bekannt, bei dem Schwefel oder Schwefelverbindungen als Katalysatorgift bei Nickel zugegeben werden. Diese Schwefelverbindungen werden jedoch durch den Prozess verändert und können den komplizierten Reaktionsablauf stören. Des weiteren ist aus der US 5.113.772 die Zugabe von schwefelfreien Verbindungen bei der Müllverbrennung bekannt, wobei kein schädliches Schwefeldioxid entsteht.

Ferner wird in der DE 40 27 819 A1 eine Verwendung von Amiden von anorganischen Säuren zur Behandlung von Abgas, insbesondere zur Minimierung von Dioxinen und Furanen offenbart. Bei dem verwendeten Harnstoff handelt es sich chemisch um ein Diamin der Kohlensäure. Speziell wird eine Zugabe von Harnstoff in fester Form oder als wässrige Lösung von Müllverbrennungsanlagen beschrieben, wodurch eine Bildung von PCDD/PCDF-Verunreinigungen verhindert wird.

Die Aufgabe der Erfindung ist es, die aus dem Stand der Technik bekannte Reduzierung der Konzentration von polychlorierten Dibenzodioxinen und -Furanen in Abgasen zu verbessern.

Gelöst wird diese Aufgabe durch die Merkmale des Patentanspruchs 1. Die Unteransprüche beschreiben vorteilhafte Ausgestaltungen des Verfahrens.

Hochtemperatur Prozesse (HT-P) können alle Prozesse sein, bei denen im Prozess oder den Teilprozessen Temperaturen über 100° C auftreten. Dazu gehören z. B.
- Thermische Abfallverwertung (Müllverbrennung und Müllpyrolyse)
- Energieerzeugung aus Rohstoffen und Reststoffen (Deponiegas, Klärschlamm, Kompost, Kabel, medizinische Rückstände Öl, Gas, Kohle, Holz)
- Teerverarbeitung und Erzeugung
- Krematorien
- Verbrennungsmotoren
- Zementherstellung
- Metallverhüttung und Sinterung
- Sekundärmetallaufbereitung
- Schreddern
- Schweißen (antogen, punkt)
- Brände und Explosionen
- Chemische HT-Verfahren
- Chloralkalielektrolyse
- Lichtbogenverfahren
- Klein- und Großfeuerungsanlagen

Der Inhibitor wird flüssig (Suspension und/oder Lösung des Wirkstoffs) oder als Feststoff in den HT-Prozess eingebracht. Insbesondere bei kontinuierlichen Prozessen wird der Inhibitor zum Prozess gegeben oder vorher dem Prozessgut (z. B. Brennstoff) zugemischt.

Der Schwefel liegt als spezielle anorganische Verbindung, dem Brennstoff zugemischt, vor. Spezielle Verbindungen wie anorganische Schwefel- und Schwefligsäureamide haben sich als wirksam zur Dioxinminderung erwiesen, wie z. B. Sulfamid. Diese Verbindungen sind thermisch weitgehend beständig und kommen daher unzersetzt durch die Reakionszone in den Abgaskanal der Verbrennungsanlage, wo sie im thermischen Dioxinbildungsfenster des Abgaskanals ihre Wirksamkeit entfalten.

Die Substanzen enthalten Stickstoff und/oder Schwefel in chemischer Bindung, sie wurden in fester Form benutzt. Folgende Substanzen zeigen eine besonders vorteilhafte Inhibitorwirkung:
1.Amidosulfonsäure (ASA)
2.Hydroxylamin-O-sulfonsäure (HOSA)
3.Sulfamid (SA)

Die Erfindung wird im folgenden anhand von Ausführungsbeispielen näher erläutert.

Der künstliche Müllbrennstoff (RDF = refuse derived fuel) wurde durch Mischung aus von repräsentativen Substanzen hergestellt um eine große Homogenität der Verbrennungsprobe zu erhalten. Dieser Brennstoff bestand aus 35 % Cellulose und Lignin, um den Papieranteil des Haushaltsmülls zu simulieren, 8,5 % Plastikmaterialien, einen kleinen Anteil einer Schwefelchemikalie (Tetramethylthioharnstoff TMTD), um den Gummianteil zu simulieren sowie 50% von Kartoffelstärke und Glycin als Beispiel für die bioabbaubare Substanzen. Daneben enthält der künstliche Müllbrennstoff kleine Anteile an anorganischen Salzen (AlCl₃, CuCl₂) sowie PVC als Chlorquelle. Die Substanzen wurden zu einem homogenen Pulver gemischt und die oben angegebenen Substanzen wurden einzeln mit 10 % Gewichtsanteil zugemischt. Außerdem wurden Inhibitoren mit einem Gewichtsanteil zwischen 1 und 10 % Amidosulfonsäure zusätzlich mit 5 % zugemischt. Neben den o. a. Inhibitoren wurde auch Harnstoff und elementarer Schwefel untersucht.

Die Verbrennung wurde in einem Laborreaktor, ein 140 cm langes Quarzrohr mit einem Querschnitt von 4,5 cm durchgeführt. Am Ende des Quarzrohres wurde Quarzwolle zum Abfangen fester Partikel benutzt. Die Rauchgase fingen anschließend in zwei mit Eis gekühlte Waschflaschen mit Toluol. Die Luftflußgeschwindigkeit wurde mit einem nachgeschalteten Rotameter kontrolliert.

Der Reaktor hatte eine elektrische Heizung, die auf 1000° C bei einem Luftfluß von 1 L /min eingestellt wurde. Es wurde 5 g Brennstoff in die Heizzone des Reaktors eingefüllt. Die Verbrennung erfolgt in 15 Minuten. Am Ende der Verbrennung wurde die Glaskomponenten getrennt und die erhaltene Asche wurde vom Quarzrohr getrennt. Die gesammelte Quarzwolle und die Glassammler wurden getrennt mit Toluol soxhleltiert, die Extrakte wurden dem allgemeinen Clean-up Verfahren für PCDD/F unterzogen und dann durch hochauflösende Gaschromatographie und hochauflösende Massenspektroskopie (HRGC/HRMS) auf Dioxine untersucht. Die ausgewerteten Ergebnisse hinsichtlich der internationalen Toxizitäts-Äquivalenten (I-TEQ) Wertewerden im folgenden angegeben. In allen Fällen wurden die Versuche zweifach durchgeführt, um einen Mittelwert zu bilden. Der durchschnittliche I-TEQ-Wert ohne Zusätze betrug 52 pg/g Brennstoff. Zugabe von Harnstoff hat nur geringen Einfluß auf den I-TEQ-Wert, der Wert beträgt 38 pg I-TEQ/g. Die schwefelhaltigen Substanzen wie Amidosulfonsäure, Hydroxyamidosulfonsäure und Sulfamid führen zu signifikanten Erniedrigung der PCDD/F Emission. Sehr niedrige I-TEQ Werte, kleiner als 1 pg/g Brennstoff wurden mit ASA, HOSA und SA beobachtet. Verbrennung mit reinem Schwefel führt zu Erniedrigung des I-TEQ-Wertes auf 1,8 pg/g Brennstoff. Die Verbrennung von künstlichen Müllbrennstoff mit 1 und 5 % ASA führt zur Erniedrigung der Dioxinwerte auf 1,6 und 1,7 pg/g Brennstoff. Die Ergebnisse zeigen, daß durch Zugabe von 10 % der Vermeidungssubstanzen eine Abnahme der Dioxinkonzentration von 99 % erfolgt, bis Zugabe von 5 % beträgt die Abnahme 96 %.

Abfallströme können erhebliche Mengen an Schwefel enthalten. Da Schwefeldioxid aus den Schwefelverbindungen des Brennstoffs beim Verbrennen entsteht und mit dem Abgas transportiert wird, kann dieser Schadstoff zur Verhinderung der Dioxinbildung benutzt werden. Der gebildete Schadstoff wird hierbei einer einfachen chemischen Umwandlung unterworfen. Dazu wird er in einer wässrigen Lösung von Ammoniak in Gegenwart von Oxidationsmitteln (Wasserstoffperoxid, Ozon und Sauerstoff mit Oxidatioskatalysator) absorbiert. Die Lösung kann mit Hilfe der Abwärme erwärmt werden, wodurch die Reaktion beschleunigt wird. Die entstandene wässrige Lösung von Sulfamidkann nun erfindungsgemäß als Inhibitor verwendet werden.

So kann zum Beispiel verwendet werden:
- Autoreifen
- Schwefelsäure, Dünnsäure
- synth. Gips
- Therapeutika
- Abraum

Der PCDD/F Minderungsstoff (Inhibitor) wird in fester Form zum Brennstoff zugemischt. Die Vermischung kann in einer Mischtrommel erfolgen oder der Minderungsstoff wird dem Brennstoff vor der Verbrennung kontinuierlich zugeführt. In speziellen Fällen kann der PCDD/F Minderungsstoff in Form einer wässrigen Suspension dem Brennstoff vor der Verbrennung zugegeben werden.

Abfallarten, die sich als Inhibitor eignen, werden homogenisiert und gasförmig, flüssig oder als Feststoff dem Prozess zugeführt. Dabei ist eine weitere Vermischung der Aggregatzustände möglich.

Durch Variation derZugabemenge der Dioxinverhinderungschemikalie wird der Minderungsgrad optimiert. Die optimale Menge hängt vom Anlagetyp und Brennstoff ab und muß jeweils empirisch bestimmt werden.

Die zugesetzte Menge des Inhibitors liegt bei 1 bis 10% bezogen auf den Brennstoff. Bei Optimierung hinsichtlich der eingesetz ten Menge am Inhibitor fährt man "von unten her" (niedrige Konzentration) an die optimale Menge heran.

Durch schnelles. Durchlaufen (Quenchen) des Abgasstroms durch das Bildungsfenster zusammen mit dem Inhibitor kann die PCDD/F Konzentration minimiert werden. Dabei reichen dann Inhibitormengen von 0,5 bis 2% bezogen auf den Brennstoff aus.

Die Inhibitoren können auch bereits in Produkten Integriert sein, sodaß bei einem späteren HAT-Prozess kein Inhibitor mehr zugeführt werden muß.

Das chemische Design von solchen Produkten wird dabei derart entworfen, dass das Produkt, welches später in eine HT-P eingebracht wird, mit dem Inhibitor ausgestattet ist. Hier wird der Zusatz von Inhibitor so gering wie möglich gehalten und sowohl homogen als auch gezielt lokal im Produkt integriert.

Die Inhibitoren sind in hohem Maße temperaturbeständig. Sie sind nach der Verbrennung zum größten Teil an der Flugasche gebunden. Sie können daher von der Flugasche getrennt und in den Prozess zurückgeführt werden. Dadurch kann die eingesetzte Menge an Inhibitoren sehr stark reduziert werden. Die Rückgewinnung und/oder Rückführung der Inhibitoren kann vorteilhafterweise bei vielen Hochtemperatur- Prozessen zur Anwendung kommen.

## Patentansprüche

1. Verfahren zur Minderung des Gehalts von polychlorierten Dibenzodioxinen und -Furanen im Abgas von chemischen Prozessen bei Temperaturen über 100°C, wobei bei den Prozessen mindestens bei den Bedingungen, bei denen die polychlorierten Dibenzodioxinen und Furanen entstehen, Amide von anorganischen Säuren vorhanden sind, **dadurch gekennzeichnet, daß** die Amide Amidosulfonsäure oder Hydroxylamin-O-sulfonsäure oder Sulfamid oder eine beliebige Mischung aus diesen drei Komponenten sind, bei einer Menge zwischen o,5 bis 10 % bezogen auf das Prozessgut.

2. Verfahren nach Anspruch 1, **dadurch gekennzeichnet, daß** die Amide vor dem Prozess dem Prozessgut beigemischt werden.

3. Verfahren nach Anspruch 1, **dadurch gekennzeichnet, daß** die Amide wärend des Prozesses jedoch vor dem Erreichen der Bedingungen, bei denen die polychlorierten Dibenzodioxine und - Furane entstehen in den Prozess eingebracht werden.

4. Verfahren nach einem der Ansprüche 1 bis 3, **dadurch gekennzeichnet, daß** die Amide als Lösung und/oder in fester Form verwendet werden.

5. Verfahren nach einem der Ansprüche 1 bis 4, **dadurch gekennzeichnet, daß** die Amide aus schwefelreichen Abfällen wie z. B. Autoreifen oder Dünnsäure dargestellt werden.

6. Verfahren nach einem der Ansprüche 1 bis 5, **dadurch gekennzeichnet, daß** nicht verbrauchte Amide dem Prozess wieder zugeführt werden.

7. Verfahren nach einem der Ansprüche 1 bis 6, **dadurch gekennzeichnet, daß** der chemische Hochtemperatur-Prozess ein thermischer Abfallverwertungs-Prozess ist.

## Claims

1. Method for the reduction of the content of polychlorinated dibenzodioxins and -furans in the offgas of chemical processes at temperatures in excess of 100°C with amides of inorganic acids existing during the processes under conditions, under which the polychlorinated dibenzodioxins and -furans are generated at least, **characterized by** these amides being amidosulfuric add or hydroxylamine-O-sulfonic acid or sulfonamide or any mixture of these three components, and their proportion amounting to 0.5 to 10% of the process material.

2. Method according to Claim 1, **characterized by** the amides being admixed to the process material prior to the process.

3. Method according to Claim 1, **characterized by** the amides being fed in during the process, but prior to reaching the conditions, under which polychlorinated dibenzodioxins and -furans are formed.

4. Method according to one of Claims 1 through 3, **characterized by** the amides being used as a solution and/or in solid form.

5. Method according to one of Claims 1 through 4, **characterized by** the amides being produced from sulfur-rich wastes, e.g. car tires or dilute acid.

6. Method according to one of Claims 1 through 5, **characterized by** unused amides being fed back into the process.

7. Method according to one of Claims 1 through 6, **characterized by** the chemical high-temperature process representing a thermal waste utilization process.

## Revendications

1. Procédé de réduction de la teneur en dibenzo-dioxines et en furanes polychlorés dans le gaz d'échappement de processus chimiques à des températures supérieures à 100°C, les processus se déroulant du moins dans les conditions dans lesquelles les dibenzo-dioxines et les furanesse forment, en présence d'amides d'acides organiques, **caractérisé en ce que** les amides sont l'acide aminosulfonique ou l'acide d'hydroxylamine-o-sulfonique ou le sulfonamide ou un mélange quelconque de ces trois composants, d'une quantité variant entre 0,5 et 10% par rapport au produit traité.

2. Procédé selon la revendication 1, **caractérisé en ce que** les amides sont ajoutés au produit traité avant le procédé.

3. Procédé selon la revendication 1, **caractérisé en ce que** les amides sont ajoutés pendant le procédé, mais avant d'atteindre les conditions dans lesquelles les dibenzo-dioxines et les furanes se forment.

4. Procédé selon l'une quelconque des revendications 1 à 3, **caractérisé en ce que** les amides sont utilisés en solution et/ou sous forme solide.

5. Procédé selon l'une quelconque des revendications 1 à 4, **caractérisé en ce que** les amides sont préparés à partir de déchets riches en soufre comme p. ex. des pneus de voitures ou de l'acide dilué.

6. Procédé selon l'une quelconque des revendications 1 à 5, **caractérisé en que** les amides non consommés sont ramenés au procédé.

7. Procédés selon l'une quelconque des revendications 1 à 6, **caractérisé en ce que** le procédé chimique à haute température est un procédé thermique de recyclage de déchets.
